# EUROPEAN PATENT SPECIFICATION

(11) **EP 4 534 195 B1**
(45) Date of publication and mention of the grant of the patent: **29.07.2026**
(21) Application number: 24186659.9
(22) Date of filing: 04.07.2024
(51) Int. Cl.: B01J 13/00, C01B 33/158, C04B 14/06, C04B 24/42, C04B 30/02, C04B 38/00

(54) **PREPARATION METHOD OF A HIGH TEMPERATURE RESISTANT SILICON ALUMINUM AEROGEL COMPOSITE MATERIALS WITH RED MUD AS RAW MATERIAL**
HERSTELLUNGSVERFAHREN VON HOCHTEMPERATURBESTÄNDIGEN SILIKON-ALUMINIUM-AIRGEL-VERBUNDMATERIALIEN MIT ROTEM SCHLAMM ALS ROHSTOFF
PROCÉDÉ DE FABRICATION DE MATÉRIAUX COMPOSITES D'AÉROGEL DE SILICIUM-ALUMINIUM RÉSISTANTS AUX HAUTE TEMPÉRATURE AVEC DE LA BOUE ROUGE COMME MATIÈRE PREMIÈRE

(30) Priority: 05.07.2023 CN 202310819134
(43) Date of publication of application: 09.04.2025
(73) Proprietor: China Building Materials Academy Co., Ltd., Beijing 100024 (CN); CNBM Technology Innovation Academy (Shandong) Co.,Ltd., 277100 Zaozhuang Shandong (CN)
(72) Inventor: ZHANG, Zhonglun, Beijing, 100024 (CN); HOU, Jianye, Zaozhuang, 277100 (CN); WANG, Mingming, Beijing, 100024 (CN); LIU, Zhensen, Zaozhuang, 277100 (CN)
(74) Representative: Chung, Hoi Kan

(56) References cited:
- CN-A- 104 844 149
- CN-A- 110 563 438
- CN-A- 114 835 467

## Description

### TECHNICAL FIELD

The present invention relates to a method for preparing high-temperature-resistant silicon-aluminum aerogel composites, and in particular, to a method for preparing high-temperature-resistant silicon-aluminum aerogel composites using red mud as a raw material through steps including pre-treated, acid leaching, catalytic reaction, and sol-gel processes.

### BACKGROUND

Red mud is a kind of bulk solid waste in aluminum industry, generally producing 1 ton of alumina will produce 1 to 2 tons of red mud. The methods of producing alumina from bauxite include Bayer method, sintering method and a combination of the sintering method and the Bayer method. Therefore, the red mud produced is divided into Bayer red mud, sintering red mud and combined red mud. The composition of red mud varies according to the production method of alumina, the main components are alumina, sodium oxide, calcium oxide, iron oxide, silicon oxide and unwashed basic sodium salts (sodium aluminum silicate, sodium carbonate, sodium hydroxide, etc.) etc. As one of the world's largest producers of alumina, China emits millions of tons of red mud annually. Direct discharging of red mud will seriously pollute environment, and it will also cause waste and loss of resources such as aluminum, calcium, and iron. Resource utilization is urgent.

Aerogels are the most ideal lightweight thermal insulation material at present. They are lightweight, amorphous and porous solid materials composed of nanocolloidal particles or polymer molecules, with extremely low density, high specific surface area and high porosity. The pore diameter of the aerogels (<50nm) is smaller than the average free path of air molecules (about 70nm), and there is no air convection in the pore of the aerogels, so they have very low gaseous heat conduction; At the same time, due to the high porosity of the aerogels and the low volume ratio of solids, the solid thermal conductivity of the aerogels is also very low, which makes aerogels have very low thermal conductivity and are considered to be the best solid materials with heat insulation performance found at present.

At present, most aerogels are prepared from organic raw materials, and the high price limits their large-scale application. Therefore, searching for cheap, efficient and environmentally friendly raw materials has become an inevitable trend of current research of aerogel materials with great necessity and practical significance.

At present, there are many researches on resource utilization of red mud, mainly focusing on the recovery of valuable elements and the preparation of roadbed, building materials and other materials, and the research on preparing aerogels using red mud has not been involved. In prior art, the patent CN201710588593.1 discloses a method for preparing iron concentrate powder by suspension roasting of red mud: the red mud is first finely ground, and then a stage of weak magnetic separation is carried out; the materials after the stage of weak magnetic separation are sequentially subjected to oxidation roasting and reduction roasting, and finally a second stage of weak magnetic separation is carried out to obtain the iron concentrate powder. The patent CN201811018582.0 discloses a red mud based material for roadbed water stability layer, which is prepared by mixing red mud, hydrated lime, fly ash, slag, sodium metasilicate pentahydrate, cement, and graded crushed stone in a certain proportion to prepare the red mud based material for roadbed water temperature layer;

The patents CN201710670415.3 and CN201510051373.6 disclose a method for preparing polyaluminum chloride from red mud. The method involves mixing red mud with hydrochloric acid for dissolution reaction, the filtrate was separated by liquid-solid and polymerized to prepare polyaluminum chloride. The patent CN201910504401.3 discloses a method for preparing water purification agent of polyaluminum chloride by using red mud. The method involves heating and stirring the red mud in an aqueous solution to enhance the dissolution of soluble alkali from the red mud. The obtained alkali solution is then concentrated and crystallized for Bayer method extraction of alumina; The patent CN202011283207.6 discloses a preparation method of silicon aluminum composite aerogels, which uses fly ash pretreatment to prepare a common silicon aluminum composite aerogels, and the aerogels are not provided with high temperature resistance, which is different from the raw materials and principles used in the present invention. The above disclosed recycling iron concentrate powder from red mud focuses on pyrometallurgy, which is relatively high in energy consumption and cost; using red mud to prepare roadbed materials, due to the presence of alkali in the red mud, it is difficult to ensure the material's performance due to the leaching of alkali during use; The use of red mud to prepare polyaluminum chloride without pre-treatment results in excessive acid consumption during the production of polyaluminum chloride, high product basicity, and low performance. CN202210678633.2, CN201510279154.3 and CN201910959352.2 disclose methods for producing aerogel materials. The method of preparing high temperature resistant aerogel composite materials with red mud as raw material in present invention can not only effectively avoid above problems, but also effectively deal with red mud waste and reduce the environmental pollution caused by the red mud, which reduces preparation cost and achieves the effect of resource recycling and utilizing.

Based on above reasons, the present invention is proposed.

### SUMMARY

Based on above reasons, aiming at problems or defects in prior art, the objects of the present invention are to provide a preparation method of high temperature resistant silicon aluminum aerogel composite materials with red mud as raw material, solving or at least partially solving above technical defects in prior art: Aiming at problems that the red mud waste cannot be effectively utilized and the environment is polluted at present, the method of the present invention realizes comprehensive utilization of the red mud; At the same time, it is provided with advantages of simple preparation process, low energy consumption, environmental friendliness, treating waste of waste, etc., truly achieving objects of recycling and utilizing of resources.

In order to achieve one of the above-mentioned objects, the technical solution adopted by the present invention is as follows:
a preparation method of high temperature resistant silicon aluminum aerogel composite materials with red mud as raw material, specifically comprising following steps:
step 1: pretreating an red mud to remove soluble alkali from the red mud, and obtaining an pretreated red mud; an process of the pretreating is as follows: mixing the red mud with deionized water, heating with stirring to react, dissolving the soluble alkali in the red mud, and obtaining the pretreated red mud through solid-liquid separation; a ratio of the red mud to deionized water is 0.5~1g/ml, and a condition of the reaction is: a reaction temperature is 50~100°C, a reaction time is 1.5~3h; and
step 2: mixing the pretreated red mud in step 1 with an aqueous hydrochloric acid solution with a concentration of 1~10 mol/L, heating for reaction at 50~90°C for 3~6 h, and filtering after the reaction is completed to obtain a solution containing silicon and aluminum, a dosage ratio of the pretreated red mud to the dilute acid solution is 0.2~1g/ml; and
step 3: mixing the solution containing silicon and aluminum in step 2 with ethanol aqueous solution, heating with stirring at 40~60°C for 1~2h; after completing stirring, exchanging obtained solution with anion resin until a pH value of the solution is 2-3; adding an alkaline catalyst for solution catalytic reaction, the catalytic reaction is carried out at 10~30 °C with a stirring time of 1~2 hours; a volume ratio of the solution containing silicon and aluminum, the anhydrous ethanol in the ethanol aqueous, and deionized water is 1: (0.5~1) : (0.4~0.8); and
step 4: adding a modifier dropwise to an solution obtained after catalysis in step 3, heating with stirring; and finally adding an chelating agent dropwise, continuing to heat with stirring for ring opening reaction to obtain an silicon aluminium sol; the modifier is any one or more of methyl orthosilicate, ethyl orthosilicate, methyl triethoxysilane; a heating temperature is 40~60°C, and a heating time is 1~2h; the chelating agent is any one or more of epichlorohydrin, 1,2~epoxybutane, 1,4~epoxybutane, epoxypropane; a volume ratio of the modifier, the chelating agent and the solution containing silicon and aluminum is (0.2-0.5) : (0.5~1) : 1; and
step 5: compositing the silicon aluminium sol obtained in step 4 with an fiber substrate, and obtaining the high temperature resistant silicon aluminum aerogel composite materials after gelling, aging and drying; the drying is performed by supercritical ethanol, and the aging is aging at an alcohol solvent of 40~80°C for 24~36 h; the fiber substrate is any one or more of glass fibers, ceramic fibers, carbon fibers, silicon carbide fibers, pre oxidized fibers, high silica fibers, mullite fibers.

Further, in step 1 of the technical solution, the red mud can be at least one of Bayer red mud, sintering red mud and combined red mud. In a preferred embodiment of the present invention, the red mud is the sintering red mud.

Specifically, in step 1 of the technical solution, the soluble alkali mainly comprising NaO, NaOH, NaAlO₂, Na₂CO₃, Na₂SiO₃, etc. The water washing method used in this step can remove the soluble alkali from the red mud, but for the insoluble alkali such as sodium aluminosilicate which exists in large quantities, such as zeolite type compounds in form of Na₈(Sl₆Al₆O₂₄)(OH)₈₈(CO₃)_{1.44}(H₂O)₂, etc., are not removed in this step.

Specifically, in step 2 of the technical solution, The main chemical reactions occur are conversion of alumina to soluble aluminum salts, and conversion of the zeolite type sodium silicoaluminate to silicic acid or silicate.

Further, in step 3 of the technical solution, the ethanol aqueous solution is prepared by mixing anhydrous ethanol and deionized water according to a ratio.

Specifically, in step 3 of the technical solution, after completing stirring, the purpose of exchanging obtained solution with anion resin is to remove anions from the solution.

Further, in the technical solution, In a preferred embodiment of the present invention, the alkaline catalyst in step 3 is an ammonia solution. An amount of the ammonia solution added is subject to adjusting a pH of the obtained reaction solution to 4~7.

Specifically, in step 3 of the technical solution: firstly, the solution containing silicon and aluminum obtained in step 2 is fully hydrolyzed under acidic condition to obtain a precursor of condensed silicon, and then the alkaline catalyst is added to accelerate condensation reaction of Al-O-Al.

Further, in step 4 of the technical solution, the modifier is any one or more of methyl orthosilicate, ethyl orthosilicate, methyl triethoxysilane, etc.

Specifically, in the technical solution, The main function of the modifier is to replace the -OH group in the silica-aluminum gel with CH₃ group, lead to the aerogel has strong hydrophobicity.

Further, in the technical solution, the chelating agent is mainly used to promote rapid gel of Al³⁺ ionic salt solution, so as to prepare and and synthesis Al₂O₃ aerogels. The reaction of gel process is shown in Formula I and Formula II (taking the epoxypropane as an example):

Al³⁺+*n*(H₂O)→[Al(H₂O)ₙ]³⁺→[Al(OH)ₓ(H₂O)ₙ₋ₓ]^{(3-x)+}+*x*H⁺ ; Formula I

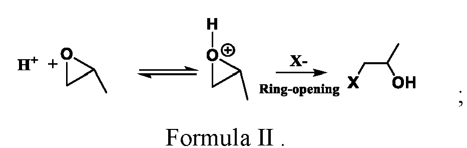

Further, in step 4 of the technical solution, after adding the chelating agent, a heating temperature is 40~60°C, and a stirring time is 1-10min.

The technical solution provided by the present invention has following gain effects compared to the prior art:
(1) The method provided by the present invention is to use red mud as raw material to prepare high temperature resistant silicon aluminum aerogel. Compared with the raw materials used for traditional preparation of aerogels, it can greatly save preparation cost of aerogels, and can also solve problems that red mud waste cannot be effectively utilized and environmental pollution at present, realizing comprehensive utilization of the red mud and the preparation of low-cost aerogels.
(2) The method provided by the present invention is to use red mud as raw material to prepare high temperature resistant aerogels, and the main structure is Al₂O₃-SiO₂ aerogel, which effectively improve performance drawbacks of single component SiO₂ aerogel and Al₂O₃ aerogels. The microporous structure of traditional single component SiO₂ aerogels collapse at 650 °C and lose thermal insulation property. Although traditional single component Al₂O₃ aerogels have good high temperature resistance, they produce a series of phase transitions when temperature rises. During the phase transition process, the volume of the aerogels continue to shrink, and the nano pore structure may be damaged, resulting in inability to use normally at high temperatures. The high temperature resistant aerogels prepared by the method provided by the present invention have excellent high temperature stability and low thermal conductivity at high temperature because of interaction of the two components Al₂O₃-SiO₂, the lattice vibration of aluminum oxide in high temperature environment is suppressed by addition of silicon, and the formation of α phase crystal nucleus will be further suppressed, lead to the pore structure of the high temperature resistant aerogels prepared by the present invention will not fluctuate significantly due to high temperature, thus, the high temperature resistant aerogels have excellent high temperature stability and low thermal conductivity at high temperatures. TG changes to 6.36% at 1200 °C, and the thermal conductivity at high temperature (1000 °C) is 0.062 W/(m · K).

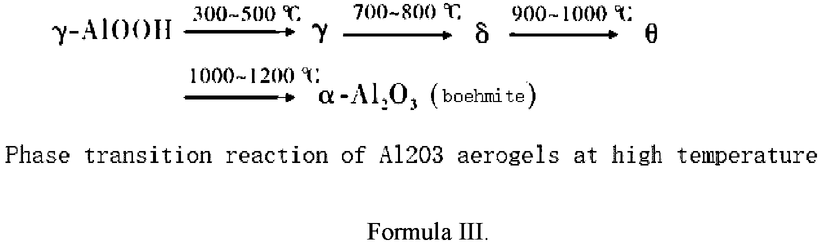

### BRIEF DESCRIPTION OF DRAWINGS

In order to provide a clearer explanation of embodiments of the present invention or the technical solutions in prior art, a brief introduction will be given below to the accompanying drawings required in the embodiments or prior art description. It is evident that the accompanying drawings in following description are only some embodiments of the present invention. For those skilled in the art, other accompanying drawings can be obtained based on these drawings without creative labor.

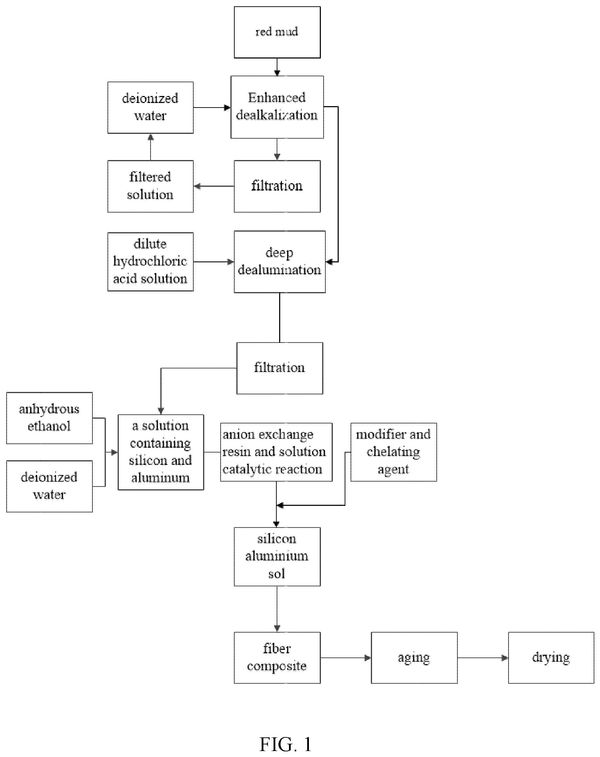

FIG. 1 is a process flowchart of using the preparation method provided by the present invention;
FIG. 2 is a SEM diagram of the high temperature resistant silicon aluminum aerogel composite materials prepared by the preparation method provided in Example 2 of the invention;
FIG. 3 shows TG curve of the high temperature resistant silicon aluminum aerogel composite materials obtained by the preparation method provided by the invention in Example 2.

### DETAILED DESCRIPTION OF THE EMBODIMENTS

Below is a further detailed explanation of the present invention through implementation cases.

In order to better understand the present invention rather than limiting its scope, all numbers used in this application to represent dosage, percentage, and other numerical values should be understood in all cases as modified by the word "approximately". Therefore, unless otherwise specified, the numerical parameters listed in the specification are approximate values that may vary depending on the desired properties being attempted. Each numerical parameter should be considered as obtained based on reported valid figures and conventional rounding methods.

The equipment and raw materials used in present invention can be purchased from market or are commonly used in this field. The methods in following embodiments, unless otherwise specified, are conventional methods in this field.

A test method for thermal conductivity of high temperature resistant silicon aluminum aerogel composite materials prepared in following embodiments of the invention refers to the Protective Hot Plate Method for the Determination of Steady State Thermal Resistance and Related Characteristics of Thermal Insulation Materials (GB/T 10294-2008).

### Example 1.

A preparation method of high temperature resistant silicon aluminum aerogel composite materials by using red mud as raw material in this embodiment, specifically comprising following steps:
Taking 100g of an red mud (mainly composed of Al₂O₃ 28% and SiO₂ 15%) from an aluminum plant in Shanxi, mixing with 200ml of deionized water and heating; Waiting for an obtained mixture rising to 100 °C and keeping for 2 hours; Taking out the red mud after heating treatment and put into a 200ml dilute hydrochloric acid solution with a concentration of 1mol/L, heating up to 50 °C and keeping for 3 hours. After vacuum filtration, cooling an obtained filtered solution, mixing 100ml of the filtered solution with 40ml anhydrous ethanol and 50ml deionized water, heating with stirring in a water bath at 40°C for 1h. After stirring, an obtained liquid product was treated with anion exchange resin, taking out the liquid product when a pH value of the liquid product was near 2, and an ammonia solution catalyst with a concentration of 1mol/L was added to the liquid product, and when a pH value of the liquid product reached near 4, and 20ml ethyl orthosilicate was added to the liquid product, stirring and heating to 50°C for 1h. Then, 50ml epoxypropane was added to an obtained solution and stirred for 5min to form a sol solution. Putting a cut fiber substrate (commercially available Si-Al composite fiber felt, 30×30cm, 1cm thick, 50g weight) into a 30cm×30cm mold and pouring the sol solution, standing and gelling. After gelling completely, a surface of an obtained gel was covered with ethanol aging solution, aging at 50°C for 36h, and the high temperature resistant silicon aluminum aerogel composite materials were obtained after drying with supercritical ethanol. A thermal conductivity of the high temperature resistant silicon aluminum aerogel composite materials measured at 800°C was 0.058 W/(m·K), and a thermal conductivity measured at 1000°C was 0.073 W/(m·K).

### Example 2.

A preparation method of high temperature resistant silicon aluminum aerogel composite materials by using red mud as raw material in this embodiment, specifically comprising following steps:
Taking 100g of an red mud (mainly composed of Al₂O₃ 28% and SiO₂ 15%) from an aluminum plant in Shanxi, mixing with 200ml of deionized water and heating; Waiting for an obtained mixture rising to 100 °C and keeping for 3 hours; Taking out the red mud after heating treatment and put into a 500ml dilute hydrochloric acid solution with a concentration of 1mol/L, heating up to 50 °C and keeping for 5 hours. After vacuum filtration, cooling an obtained filtered solution, mixing 100ml of the filtered solution with 50ml anhydrous ethanol and 40ml deionized water, heating with stirring in a water bath at 50°C for 2h. After stirring, an obtained liquid product was treated with anion exchange resin, taking out the liquid product when a pH value of the liquid product was near 2, and an ammonia solution catalyst with a concentration of 1mol/L was added to the liquid product, and when a pH value of the liquid product reached near 4, and 50ml ethyl orthosilicate was added to the liquid product, stirring and heating to 50°C for 1h. Then, 50ml epoxypropane was added to an obtained solution and stirred for 5min to form a sol solution. Putting a cut fiber substrate (commercially available Si-Al composite fiber felt, 30×30cm, 1cm thick, 50g weight) into a 30cm×30cm mold and pouring the sol solution, standing and gelling. After gelling completely, a surface of an obtained gel was covered with ethanol aging solution, aging at 60°C for 36h, and the high temperature resistant silicon aluminum aerogel composite materials were obtained after drying with supercritical ethanol. A thermal conductivity of the high temperature resistant silicon aluminum aerogel composite materials measured at 800°C was 0.050 W/(m·K), and a thermal conductivity measured at 1000°C was 0.062 W/(m·K).

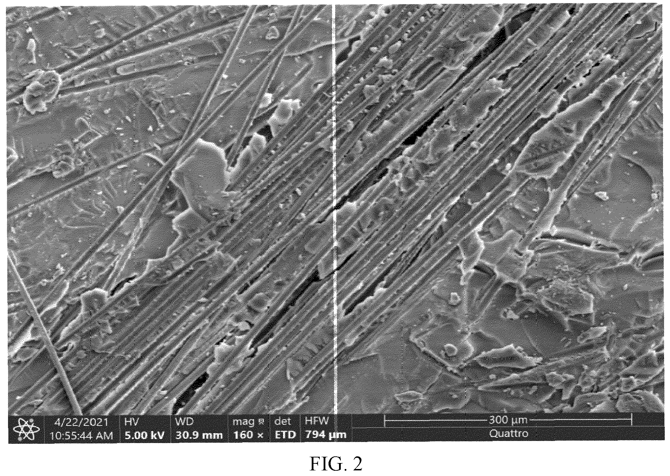

FIG. 2 is a SEM diagram of the high temperature resistant silicon aluminum aerogel composite materials prepared by the preparation method provided in Example 2 of the invention. It can be seen from the figure that the silicon aluminum aerogel composite materials prepared by the present invention is closely combined with the composite substrate, so that the silicon aluminum composite materials has good high temperature resistance.

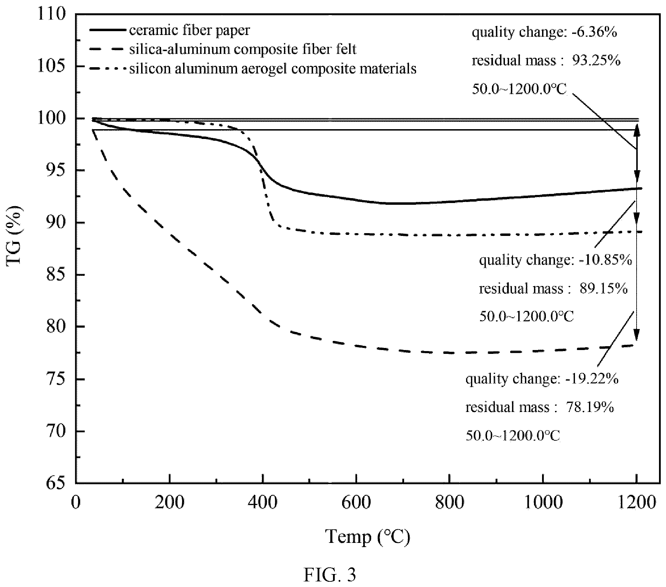

FIG. 3 shows TG curve of the high temperature resistant silicon aluminum aerogel composite materials obtained by the preparation method provided by the invention in Example 2. It can be seen from the figure that the silicon aluminum aerogel composite materials prepared by the present invention has stable mass loss at high temperature and good high temperature resistance.

### Example 3.

A preparation method of high temperature resistant silicon aluminum aerogel composite materials by using red mud as raw material in this embodiment, specifically comprising following steps:
Taking 100g of an red mud (mainly composed of Al₂O₃ 28% and SiO₂ 15%) from an aluminum plant in Shanxi, mixing with 180ml of deionized water and heating; Waiting for an obtained mixture rising to 100 °C and keeping for 2 hours; Taking out the red mud after heating treatment and put into a 500ml dilute hydrochloric acid solution with a concentration of 1mol/L, heating up to 50 °C and keeping for 5 hours. After vacuum filtration, cooling an obtained filtered solution, mixing 100ml of the filtered solution with 40ml anhydrous ethanol and 40ml deionized water, heating with stirring in a water bath at 40°C for 1h. After stirring, an obtained liquid product was treated with anion exchange resin, taking out the liquid product when a pH value of the liquid product was near 2, and an ammonia solution catalyst with a concentration of 1mol/L was added to the liquid product, and when a pH value of the liquid product reached near 4, and 50ml ethyl orthosilicate was added to the liquid product, stirring and heating to 40°C for 1h. Then, 50ml epoxypropane was added to an obtained solution and stirred for 5min to form a sol solution. Putting a cut fiber substrate (commercially available Si-Al composite fiber felt, 30×30cm, 1cm thick, 50g weight) into a 30cm×30cm mold and pouring the sol solution, standing and gelling. After gelling completely, a surface of an obtained gel was covered with ethanol aging solution, aging at 60°C for 36h, and the high temperature resistant silicon aluminum aerogel composite materials were obtained after drying with supercritical ethanol. A thermal conductivity of the high temperature resistant silicon aluminum aerogel composite materials measured at 800°C was 0.056 W/(m·K), and a thermal conductivity measured at 1000°C was 0.068 W/(m·K).

### Example 4.

A preparation method of high temperature resistant silicon aluminum aerogel composite materials by using red mud as raw material in this embodiment, specifically comprising following steps:
Taking 100g of an red mud (mainly composed of Al₂O₃ 28% and SiO₂ 15%) from an aluminum plant in Shanxi, mixing with 150ml of deionized water and heating; Waiting for an obtained mixture rising to 100 °C and keeping for 2 hours; Taking out the red mud after heating treatment and put into a 300ml dilute hydrochloric acid solution with a concentration of 1mol/L, heating up to 50 °C and keeping for 3 hours. After vacuum filtration, cooling an obtained filtered solution, mixing 100ml of the filtered solution with 50ml anhydrous ethanol and 50ml deionized water, heating with stirring in a water bath at 40°C for 1h. After stirring, an obtained liquid product was treated with anion exchange resin, taking out the liquid product when a pH value of the liquid product was near 2, and an ammonia solution catalyst with a concentration of 1mol/L was added to the liquid product, and when a pH value of the liquid product reached near 4, and 20ml ethyl orthosilicate was added to the liquid product, stirring and heating to 50°C for 1h. Then, 50ml epoxypropane was added to an obtained solution and stirred for 5min to form a sol solution. Putting a cut fiber substrate (commercially available Si-Al composite fiber felt, 30×30cm, 1cm thick, 50g weight) into a 30cm×30cm mold and pouring the sol solution, standing and gelling. After gelling completely, a surface of an obtained gel was covered with ethanol aging solution, aging at 50°C for 36h, and the high temperature resistant silicon aluminum aerogel composite materials were obtained after drying with supercritical ethanol. A thermal conductivity of the high temperature resistant silicon aluminum aerogel composite materials measured at 800°C was 0.062 W/(m·K), and a thermal conductivity measured at 1000°C was 0.083 W/(m·K).

**Table 1 Thermal conductivity of products obtained from Examples 1-4**

| name | 800°C thermal conductivityW/(m·K) | 1000°C thermal conductivityW/(m·K) |
|---|---|---|
| Example 1 | 0.058 | 0.073 |
| Example 2 | 0.050 | 0.062 |
| Example 3 | 0.056 | 0.068 |
| Example 4 | 0.062 | 0.083 |

The scope of the present invention is defined by the appended claim.

## Claims

1. A preparation method of high temperature resistant silicon aluminum aerogel composite materials with red mud as raw material, wherein comprising the following steps:
step 1: pretreating a red mud to remove soluble alkali from the red mud, and obtaining a pretreated red mud; a process of the pretreating is as follows: mixing the red mud with deionized water, heating with stirring to react, dissolving the soluble alkali in the red mud, and obtaining the pretreated red mud through solid~liquid separation; a ratio of the red mud to deionized water is 0.5~1g/ml, and a condition of the reaction is: a reaction temperature is 50~100°C, a reaction time is 1.5~3h; and
step 2: mixing the pretreated red mud in step 1 with a dilute acid solution with a concentration of 1~10 mol/L, heating for reaction at 50~90°C for 3~6 h, and filtering after the reaction is completed to obtain a solution containing silicon and aluminum, a dosage ratio of the pretreated red mud to the dilute acid solution is 0.2~1g/ml; and
step 3: mixing the solution containing silicon and aluminum in step 2 with ethanol aqueous solution, heating with stirring at 40~60°C for 1~2 h; after completing stirring, exchanging obtained solution with anion resin until a pH value of the solution is 2~3; adding an alkaline catalyst for solution catalytic reaction, the catalytic reaction is carried out at 10~30°C with a stirring time of 1~2 hours; a volume ratio of the solution containing silicon and aluminum, the anhydrous ethanol in the ethanol aqueous, and deionized water is 1 : 0.5∼1 : 0.4∼0.8 ; and
step 4: adding a modifier dropwise to an solution obtained after catalysis in step 3, heating with stirring; and finally adding an chelating agent dropwise, continuing to heat with stirring for ring opening reaction to obtain an silicon aluminium sol; the modifier is any one or more of methyl orthosilicate, ethyl orthosilicate, methyl triethoxysilane; a heating temperature is 40~60°C, and a heating time is 1~2h; the chelating agent is any one or more of epichlorohydrin, 1,2~epoxybutane, 1,4~epoxybutane, epoxypropane; a volume ratio of the modifier, the chelating agent and the solution containing silicon and aluminum is 0.2∼0.5 : 0.5∼1 : 1 ; and
Step 5: compositing the silicon aluminium sol obtained in step 4 with an fiber substrate, and obtaining the high temperature resistant silicon aluminum aerogel composite materials after gelling, aging and drying; the drying is performed by supercritical ethanol, and the aging is aging in an alcohol solvent of 40~80°C for 24~36 h; the fiber substrate is any one or more of glass fibers, ceramic fibers, carbon fibers, silicon carbide fibers, pre oxidized fibers, high silica fibers, mullite fibers.

## Patentansprüche

1. Ein Herstellungsverfahren für hochtemperaturbeständige Silizium-Aluminium-Aerogel-Verbundwerkstoffe unter Verwendung von Rotschlamm als Ausgangsstoff, umfassend die folgenden Schritte:
Schritt 1: Vorbehandlung eines Rotschlamm, um lösliche Alkalien aus dem Rotschlamm zu entfernen, und Gewinnung eines vorbehandelten Rotschlamm; ein Verfahren der Vorbehandlung ist wie folgt: Mischen des Rotschlamm mit deionisiertem Wasser, Erhitzen unter Rühren zur Reaktion, Auflösen der löslichen Alkalien im Rotschlamm und Erhalt des vorbehandelten Rotschlamm durch Fest-Flüssig-Trennung; das Verhältnis von Rotschlamm zu deionisiertem Wasser beträgt 0.5~1g/ml, und die Reaktionsbedingungen sind: eine Reaktionstemperatur von 50~100°C, eine Reaktionszeit von 1.5~3h; und
Schritt 2: Mischen des in Schritt 1 vorbehandelten Rotschlamm mit einer verdünnten Säurelösung mit einer Konzentration von 1~10 mol/L, Erhitzen zur Reaktion bei 50~90°C für 3-6h, und Filtration nach Abschluss der Reaktion, um eine Lösung zu erhalten, die Silizium und Aluminium enthält; das Dosierungsverhältnis des vorbehandelten Rotschlamm zur verdünnten Säurelösung beträgt 0.2~1 g/ml; und Schritt 3: Mischen der in Schritt 2 erhaltenen Lösung, die Silizium und Aluminium enthält, mit einer Ethanol-Wasser-Lösung, Erhitzen unter Rühren bei 4060°C für 1~2h; nach Abschluss des Rührens, Austausch der erhaltenen Lösung mit Anionenaustauscherharz, bis ein pH-Wert der Lösung von 2~3 erreicht ist; Zugabe eines alkalischen Katalysators für die katalytische Reaktion der Lösung, wobei die katalytische Reaktion bei 10~30°C mit einer Rührzeit von 1~2h durchgeführt wird; das Volumenverhältnis der Lösung, die Silizium und Aluminium enthält, des wasserfreien Ethanols in der Ethanol-WasserLösung und des deionisierten Wassers beträgt 1: 0.5~1: 0.4~0.8; und
Schritt 4: Tropfenweise Zugabe eines Modifikators zu einer in Schritt 3 nach der Katalyse erhaltenen Lösung, Erhitzen unter Rühren; und schließlich tropfenweise Zugabe eines Chelatbildners, Weiteres Erhitzen unter Rühren zur Durchführung einer Ringöffnung, um ein Silizium-Aluminium-Sol zu erhalten; der Modifikator ist einer oder mehrere der folgenden: Methylorthosilikat, Ethylorthosilikat, Methyltriethoxysilan; die Erhitzung erfolgt bei 40~60°C für 1~2h; der Chelatbildner ist einer oder mehrere der folgenden: Epichlorhydrin, 1,2~epoxybutan, 1,4~epoxybutan, Epoxypropan; das Volumenverhältnis des Modifikators, des Chelatbildners und der Lösung, die Silizium und Aluminium enthält, beträgt 0.2~0.5: 0.5~1: 1; und
Schritt 5: Kombination des in Schritt 4 erhaltenen Silizium-Aluminium-Sols mit einem Faserträgermaterial, und Gewinnung der hochtemperaturbeständigen Silizium-Aluminium-Aerogel-Verbundwerkstoffe nach Vergelierung, Alterung und Trocknung;
die Trocknung erfolgt mittels überkritischen Ethanols, und die Alterung erfolgt in einem alkoholischen Lösungsmittel bei 40~80°C für 24~36h; das Faserträgermaterial ist einer oder mehrere der folgenden: Glasfasern, keramische Fasern, Kohlefasern, Siliziumcarbidfasern, voroxidierte Fasern, hochsilikatreiche Fasern, Mullitfasern.

## Revendications

1. Un procédé de préparation de matériaux composites aérogels en aluminium de silicium résistants à haute température à partir de boue rouge comme matière première, comprenant les étapes suivantes :
Etape 1 : prétraiter une boue rouge pour éliminer l'alcali soluble de la boue rouge, et obtenir une boue rouge prétraitée ; un procédé du prétraitement est le suivant : mélanger la boue rouge avec de l'eau déionisée, chauffer en remuant pour réagir, dissoudre l'alcali soluble dans la boue rouge, et obtenir la boue rouge prétraitée par séparation solideliquide ; un rapport de boue rouge à eau déionisée est de 0,5 à 1 g/ml, et une condition de la réaction est : une température de réaction de 50 à 100°C, un temps de réaction de 1,5 à 3h ; et
Etape 2 : mélanger la boue rouge prétraitée à l'étape 1 avec une solution acide diluée d'une concentration de 1 à 10 mol/L, chauffer pour la réaction à 50 à 90°C pendant 3 à 6 heures, puis filtrer après la fin de la réaction pour obtenir une solution contenant du silicium et de l'aluminium, un rapport de dosage de la boue rouge prétraitée à la solution acide diluée de 0,2 à 1 g/ml ; et
Etape 3 : mélanger la solution contenant du silicium et de l'aluminium de l'étape 2 avec une solution aqueuse d'éthanol, chauffer avec agitation à 40 à 60 °C pendant 1 à 2 heures ; après avoir terminé l'agitation, échanger la solution obtenue avec une résine anionique jusqu'à ce que la valeur de pH de la solution soit de 2 à 3 ; ajouter un catalyseur alcalin pour la réaction catalytique de la solution, la réaction catalytique est effectuée à 10 à 30 °C avec un temps d'agitation de 1 à 2 heures ; un ratio volumique de la solution contenant du silicium et de l'aluminium, de l'éthanol anhydre dans l'éthanol aqueux et de l'eau déionisée est de 1 : 0,5 à 1 : 0,4 à 0,8 ; et
Etape 4 : ajout goutte à goutte d'un modificateur à une solution obtenue après la catalyse à l'étape 3, chauffage avec agitation ; et enfin ajout goutte à goutte d'un agent chélatant, en continuant à chauffer avec agitation pour la réaction d'ouverture de l'anneau afin d'obtenir un sol de silicium-aluminium ; le modificateur est un ou plusieurs de orthosilicate de méthyle, orthosilicate d'éthyle, triéthoxysilane de méthyle ; la température de chauffage est de 40 à 60 °C, et le temps de chauffage est de 1 à 2 h ;
l'agent chélatant est un ou plusieurs de épichlorhydrine, 1,2-époxybutane, 1,4-époxybutane, époxypropane ; le rapport volumique du modificateur, de l'agent chélatant et de la solution contenant du silicium et de l'aluminium est de 0,2 à 0,5 : 0,5 à 1 : 1 ; et
Etape 5 : composer le sol de silicium-aluminium obtenu à l'étape 4 avec un substrat en fibres, et obtenir les matériaux composites aérogel de silicium-aluminium résistants à haute température après gélification, vieillissement et séchage ; le séchage est effectué par éthanol supercritique, et le vieillissement se fait dans un solvant alcoolique à 40 à 80°C pendant 24 à 36 h ; le substrat en fibres est l'un ou plusieurs parmi les fibres de verre, les fibres céramiques, les fibres de carbone, les fibres de carbure de silicium, les fibres pré-oxydées, les fibres à haute teneur en silice, les fibres de mullite.
